# EUROPÄISCHE PATENTSCHRIFT

(11) **EP 0 500 536 B1**
(45) Veröffentlichungstag und Bekanntmachung des Hinweises auf die Patenterteilung: **04.10.1995**
(21) Anmeldenummer: 90912740.9
(22) Anmeldetag: 05.09.1990
(51) Int. Cl.: A46B 13/02

(54) **ELEKTRISCHE ZAHNBÜRSTE MIT DREHBAREM BORSTENTRÄGER**
ELECTRIC TOOTHBRUSH WITH ROTARY BRISTLE CARRIER
BROSSE A DENTS ELECTRIQUE A PORTE-SOIES ROTATIF

(30) Priorität: 14.11.1989 DE 3937850
(43) Veröffentlichungstag der Anmeldung: 02.09.1992
(73) Patentinhaber: Braun Aktiengesellschaft, Frankfurt am Main (DE)
(72) Erfinder: KRESSNER, Gerhard, D-6472 Altenstadt (DE); HERZOG, Karl, D-6000 Frankfurt am Main (DE); SCHWEINGRUBER, Otto, D-6241 Glashütten (DE); HILFINGER, Peter, D-6380 Bad Homburg (DE)
(86) Internationale Anmeldenummer: DE9000672
(87) Internationale Veröffentlichungsnummer: WO9107116

(56) Entgegenhaltungen:
- DE-A- 2 302 630
- FR-A- 1 175 530
- US-A- 1 489 971

## Beschreibung

Die Erfindung betrifft eine elektrische Zahnbürste mit einem Griffteil, der einen elektro-motorischen Antrieb umraßt. Mit dem Griffteil ist ein Bürstenteil verbindbar, wobei der Bürstenteil eine Welle mit Mitteln zur Drehmomentabgabe an einen Borstenträger aufweist und an einem dem Griffteil abgewandten Ende des Bürstenteils ein Borstenträger drehbar gelagert angeordnet ist. Der Borstenträger umfaßt Mittel zur Drehmomentaufnahme und Mittel zur Halterung von Borsten, wobei eine Drehachse des Borstenträgers winklig, insbesondere in etwa rechtwinklig, zu einer Längsmittelachse des Bürstenteils ausgerichtet ist.

Eine Zahnbürste mit den genannten Merkmalen ist bereits aus der internationalen Patentanmeldung, Veröffentlichungsnummer WO 84/02453 bzw. der aus dieser Anmeldung hervorgegangenen US-PS 4 619 009 bekannt. Der Borstenträger dieser Zahnbürste ist mit einem Lagerabschnitt in einer Lagerbohrung am Kopfende des Bürstenteils gelagert. Fixiert wird der Borstenträger mittels eines Steckriegels, der in eine Ringnut des Lagerabschnitts eingreift. Angetrieben wird der Borstenträger mittels einer Antriebswelle, welche ein Trägerrohr durchsetzt und am kopfseitigen Ende einen Kegelradzahnkranz aufweist. Dieser Kegelradzahnkranz greift in einen Zahnkranz am Borstenträger ein, wobei dieser Zahnkranz am Borstenträger unmittelbar unterhalb einer Trägerplatte des Borstenträgers angeordnet ist. Da die Drehachse des Borstenträgers rechtwinklig zur Trägerrohrlängsachse angeordnet ist, sind die Trägerplatte und die Mittel zur Aufnahme des Drehmoments des Borstenträgers beide auf einer Seite der Längsmittelachse des Trägerrohrs bzw. Bürstenteils angeordnet.

Diese bekannte Anordnung weist die folgenden Nachteile auf: Die drehbaren Teile, wie z.B. die Antriebswelle und der Borstenträger, aber auch die Verriegelung und die Lageraufnahme des Borstenträgers sowie insbesondere die Mittel zur Drehmomentabgabe bzw. -aufnahme, sind einem starken Verschleiß ausgesetzt. Hierbei ist insbesondere zu berücksichtigen, daß Zahnbürsten im Regelfall unter Verwendung von Zahnputzmitteln eingesetzt werden, die in mehr oder weniger hohem Maße Schleifmittel enthalten. Aus diesen Gründen ist es angezeigt, Maßnahmen zu treffen, die die Lebensdauer der elektrischen Zahnbürste verlängern, selbst dann, wenn diese Zahnbürste unter Verwendung von Zahnputzmitteln benutzt wird.

Der Erfindung liegt die Aufgabe zugrunde, die Nachteile des bekannten Standes der Technik zu vermeiden und eine elektrisch betriebene Zahnbürste zu schaffen, die auch unter Einsatz von Zahnputzmitteln eine hohe Lebensdauer aufweist und wirtschaftlich zu fertigen ist.

Diese Aufgabe wird durch eine elektrische Zahnbürste mit den eingangs genannten Merkmalen gelöst, bei der alle Mittel zur Drehmomentübertragung als separate Teile ausgebildet sind, aus Sintermetall bestehen und über Kerbverzahnungen, insbesondere Schwalbenschwanzverzahnungen jeweils mit der Welle bzw. den Mitteln zur Halterung der Borsten verbunden sind.

Die Ausgestaltung der Mittel zur Drehmomentübertragung als Sintermetallteile hat den Vorteil, daß der Verschleiß dieser stark beanspruchten Teile stark reduziert wird, selbst dann, wenn die Zahnbürste in Verbindung mit Zahnputzmittel eingesetzt wird.

Aus Kostengründen sind lediglich die Mittel zur Drehmomentübertragung, nicht aber die Welle und die Mittel zur Halterung der Borsten aus Sintermetall hergestellt. Eine sichere und dauerhafte Festlegung der Mittel zur Drehmomentübertragung, jeweils an der Welle bzw. den Mitteln zur Halterung der Borsten wird dadurch gewährleistet, daß Kerbverzahnungen, insbesondere Schwalbenschwanzverzahnungen, zur Verbindung der Mittel zur Drehmomentübertragung jeweils mit der Welle bzw. den Mitteln zur Halterung der Borsten vorgesehen sind. Die Kerbverzahnungsverbindungen dieser Sintermetallteile mit der Welle bzw. den Mitteln zur Halterung der Borsten, die beide in der Regel aus technischen Kunststoffen hergestellt sind, gewährleisten eine flächige und damit dauerhafte Übertragung der erforderlichen Drehmomente im Vergleich zu herkömmlichen Verbindungen.

Dadurch, daß die Mittel zur Drehmomentaufnahme und die Mittel zur Halterung der Borsten einander gegenüberliegend, insbesondere jeweils unterhalb bzw. oberhalb der Längsmittelachse des Bürstenteils am Borstenträger angeordnet sind und die Mittel zur Drehmomentabgabe der Welle im Bereich zwischen den Mitteln zur Drehmomentaufnahme und den Mitteln zur Halterung der Borsten überlappend in den Borstenträger eingreifen, wird folgender Vorteil erreicht. Durch diese Maßnahme wirkt die Welle mit den Mitteln zur Drehmomentabgabe gleichzeitig als Verriegelung des Borstenträgers, da die Welle in den Borstenträger zwischen den Mitteln zur Drehmomentaufnahme und den Mitteln zur Halterung der Borsten am Borstenträger überlappend eingreift. Eine zusätzliche Verriegelung des Borstenträgers mit dem damit einhergehenden erhöhten Verschleiß der Lagerteile entfällt daher völlig.

Dadurch, daß der Borstenträger auf einer Achse des Bürstenteils gelagert ist und die Mittel zur Drehmomentaufnahme im Bereich eines Fußpunktes der Achse am Borstenträger angeordnet sind, werden die aufgrund der Drehmomentübertragung im Getriebe auf die Achse des Borstenträgers wirkenden radialen Kräfte dort in die Achse eingeleitet, wo sie zu minimalen Kipp- bzw. Biegemomenten führen. Durch diese Maßnahme wird die Reibung der Lagerteile, wie auch der Verschleiß, vermindert.

Darüberhinaus trägt diese Maßnahme unter Inkaufnahme eines gewissen Verschleisses der bewegbaren Teile dazu dennoch eine sichere Funktion der Zahnbürste zu gewährleisten. Anhand des genannten Standes der Technik sei dies im folgenden näher erläutert. Nach einer längeren Betriebszeit wird der Lagerabschnitt bzw. die Lagerbohrung einen gewissen Abrieb erfahren, so daß der Borstenträger aufgrund der speziellen Anordnung der Zahnräder des Getriebes sowie der daraus resultierenden, auf den Borstenträger wirkenden radialen Kraftkomponenten aus der idealen Drehachse herausgekippt wird in Richtung der Seitenwand. Dies führt dazu, daß mit zunehmendem Verschleiß der Lagerteile die Zahnräder immer weniger in Eingriff miteinander gelangen und ab einem bestimmten Zeitpunkt überhaupt nicht mehr miteinander kämmen. Die bekannte Zahnbürste ist sodann unbrauchbar und muß ausgewechselt werden.

Eine besonders vorteilhafte Ausgestaltung stellt eine derartige Anordnung der Drehmomentübertragungsmittel dar, bei der die Drehmomentübertragung auf den Borstenträger oberhalb eines Fußpunktes einer Achse zur Lagerung des Borstenträgers und unterhalb der Längsmittelachse des Bürstenteils erfolgt. Obwohl die bei der Drehmomentübertragung entstehenden Radialkräfte als Kippmoment axial auf den Borstenträger einwirken und nach entsprechendem Verschleiß der Lagerteile auch ein tatsächliches Kippen des Borstenträgers bewirken, führt diese Kippbewegung der Drehachse des Borstenträgers nicht dazu, daß die Drehmomentabgabe- bzw. Drehmomentaufnahmemittel außer Eingriff geraten. Es zeigt sich, daß die Drehmomentübertragungsmittel bei einem Kippen der Drehachse sogar in tieferen Eingriff gelangen. Diese spezielle Anordnung zur Einleitung des Drehmoments weist somit im Gegensatz zur Ausführungsform nach dem Stand der Technik die Tendenz auf, daß ein Abrieb der beweglichen Teile eine Bewegung der Drehmomentübertragungsmittel in Richtung festerer Verzahnung bewirkt.

Die Ausbildung der Drehmomentübertragungsmittel als Kegelradverzahnung weist den Vorteil der herstellungstechnischen Beherrschbarkeit und relativ einfach zu berechnenden Geometrie auf. Die Anordnung einer Trägerplatte, die der Kegelradverzahnung des Borstenträgers gegenüberliegt, zur Aufnahme von Borsten oder Borstenbüscheln gewährleistet eine freie Gestaltung und Optimierung des Borstenfeldes bezüglich der Reinigungswirkung der erfindungsgemäßen Zahnbürste. Die Ausgestaltung der Kegelradverzahnung der Welle als Kegelradsegment erlaubt eine Verkürzung der Baulänge des Bürstenteils unter Beibehaltung der oben erwähnten Vorteile. Der in einem Bereich von etwa +/- 35° alternierend drehbar angetriebene Borstenträger gewährleistet eine intensive Putzwirkung der Zahnbürste. Die Anbringung von Durchbrechungen in einem Trägerrohr des Bürstenteils gewährleistet eine problemlose Reinigung und Trocknung der Zahnbürste nach dem Putzvorgang und sorgt auch während des Putzvorganges dafür, daß innerhalb des Bürstenteils keine oder eine nur geringe Pumpwirkung aufgrund der alternierenden Drehbewegung des Kegelradsegments der Welle auftreten. Durch diese Maßnahmen läßt sich ein Eindringen von Zahnputzmitteln in die Lager weitestgehend vermeiden bzw. nach Beendigung des Putzvorganges bereits eingedrungenes Zahnputzmittel aus den Lagern wieder entfernen. Eine Anbringung von keilförmigen Verdickungen auf der Welle im Bereich der Durchbrechungen des Trägerrohrs des Bürstenteils bewirkt, daß in den Wellenbereich eingedrungenes Wasser aufgrund der Zentrifugalkraft von den keilförmigen Verdickungen weg in den Außenraum geschleudert wird. Diese Maßnahme gewährleistet, daß die in das Trägerrohr eingedrungene Flüssigkeit nicht oder nur wenig durch das gesamte Trägerrohr zum Griffteil wandern kann, sondern vorher zum größten Teil durch die Schleuderringe aus dem Trägerrohr entfernt wird. Auch hierdurch wird ein Verschleiß des Bürstenteils aufgrund von in den Trägerkörper eingedrungenen Zahnputzmitteln weitestgehend verringert.

Weitere Vorteile der Erfindung ergeben sich aus der nachfolgenden Beschreibung eines Ausführungsbeispieles in Verbindung mit den Figuren.

Es zeigen:

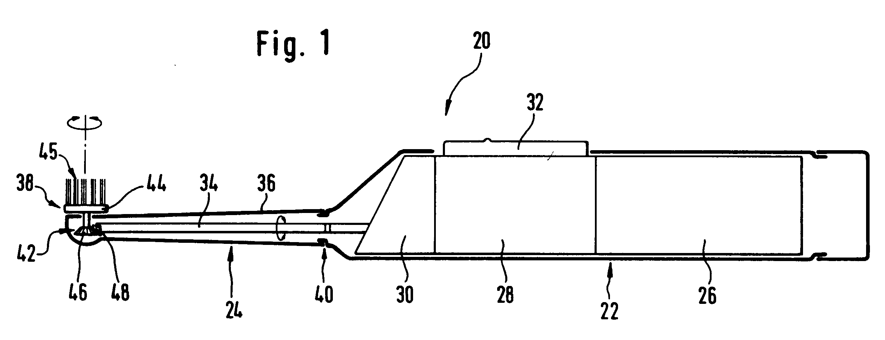

- Fig. 1: eine schematische Darstellung eines Ausführungsbeispiels der Zahnbürste nach der Erfindung,
- Fig. 2: den vorderen Teil des Bürstenteils der Zahnbürste nach Fig. 1 im Längsschnitt, wobei die Welle ungeschnitten dargestellt ist und
- Fig. 3: eine Draufsicht auf den Hülsenabschnitt, den Zapfen, die Kegelradverzahnung und die Achse gemäß der Schnittlinie A-A der Fig. 2.

In den Figuren ist mit der Bezugsziffer 20 eine elektrische Zahnbürste bezeichnet. Die Zahnbürste 20 besteht aus einem Griffteil 22 und einem an den Griffteil 22 ankuppelbaren Bürstenteil 24. Der Griffteil 22 nimmt auf einen Akkumulator 26 oder auch eine Batterie, einen Elektromotor 28 und eine Umsteuerungseinrichtung 30 zur Umsetzung der kontinuierlichen Rotationsbewegung des Elektromotors 28 in eine alternierende Drehbewegung. Am Griffteil außen ist ein Schalter 32 angeordnet zur Aktivierung der Zahnbürste 20. Der Bürstenteil 24 besteht aus einem hohen Trägerrohr 36, welches eine Welle 34 aufnimmt. Das Trägerrohr 36 und die Welle 34 sind über eine nicht näher dargestellte Kupplung 40 mit dem Griffteil 22 verbindbar. An dem dem Griffteil 22 abgewandten Ende des Bürstenteils 24 ist ein Borstenträger 38 angeordnet mit einer Trägerplatte 44 zur Aufnahme von Borsten 45 bzw. Borstenbüscheln. Der Borstenträger 38 weist an dem der Trägerplatte 44 gegenüberliegenden Ende eine Kegelradverzahnung 46 auf, welche mit einem am Kopfende der Welle 34 angeordneten Kegelradsegment 48 kämmt. Die Drehachse des Borstenträgers 38 schließt mit der Drehachse der Welle 34 einen Winkel von ca. 90° ein. Dieser Winkel kann jedoch, ohne die Erfindung zu beschränken, auch Werte von 30° - 120° einnehmen. Über das aus den Kegelradverzahnungen 46 und 48 bestehende Kegelradgetriebe 42 wird das Drehmoment der alternierend drehbaren Welle 34 auf den im bevorzugt rechten Winkel zur Welle 34 angeordneten Borstenträger 38 übertragen. Der vom Borstenträger 38 überstrichene Drehwinkelbereich kann Werte im Bereich zwischen +/- 20° und +/- 100° annehmen, bevorzugt jedoch einen Wert von etwa +/- 35°.

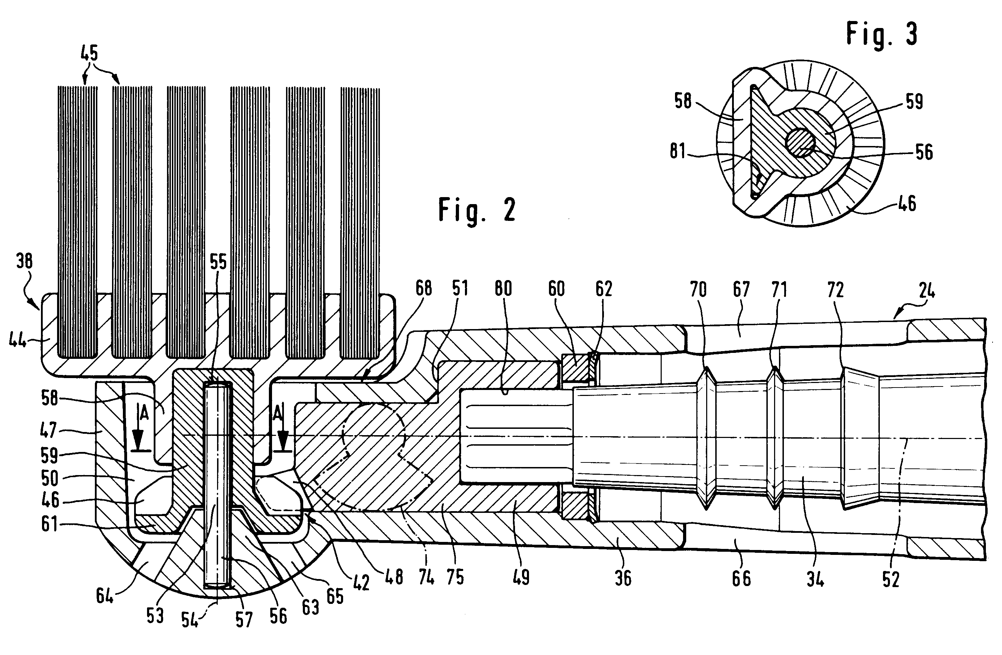

Wie genauer aus der Darstellung der Fig. 2 ersichtlich ist, verjüngt sich das hohlkonische Trägerrohr 36 in Richtung des dem Griffteil 22 abgewandten Kopfendes. Das Kopfende des Trägerrohrs 36 ist als nach oben offene, topfförmige Aufnahme 50 ausgebildet. In einem Übergangsbereich 51 verringert sich der Innendurchmesser des Trägerrohrs 36 sprungartig auf etwa 3/4 seines ursprünglichen Durchmessers. Diese Anlagefläche dient in Verbindung mit dem Ring 60 und Sicherungsring 62 zur axialen Sicherung eines Wellenstücks 75, welches im Übergangsbereich 51 des Trägerrohrs 36 angeordnet ist. Am der topfförmigen Ausnehmung 50 zugewandten Ende weist das Wellenstück 75 ein Kegelradsegment 48 auf. Das Kegelradsegment 48 ist an dem dem Bodenbereich der topfförmigen Ausnehmung 50 zugewandten Teil des Wellenstücks 75 unterhalb einer Längsmittelachse 52 des Bürstenteils 24 angeordnet. Das Wellenstück 75 weist in dem sprungartig verjüngten Bereich einen Querschnitt auf, der mit der Bezugsziffer 74 bezeichet ist. Der Durchmesser des Wellenstücks 75 vergrößert sich von einem geringen Durchmesser im oberen Bereich sprungartig in einen größeren Durchmesser im unteren Bereich, wobei der kleine Durchmesser über einen Winkel bereich von etwa 250° und der große Durchmesser über einen Winkel bereich von 110° eingehalten ist. Durch diese Formgebung ist eine alternierende Drehbewegung des Wellenstücks von etwa +/- 35° möglich. An dem dem Kegelradsegment 48 abgewandten Ende weist das Wellenstück 75 zylindrische, dem Innendurchmesser des Trägerrohrs 36 angepaßte, Umfangsmaße auf. Das Wellenstück läuft aus in eine Nabe 49, deren Innenumfang eine Kerbverzahnung 80 aufweist. Die Innenumfangslinie der Kerbverzahnung weist einen in etwa sinusförmigen oder rosettenartigen Verlauf auf, so daß eine optimale, flächige Drehmomentübertragung von der Welle 34, deren Kopfende eine der Kerbinnenverzahnung 80 des Wellenstücks 75 angepaßte Kerbaußenverzahnung aufweist, gewährleistet ist. Bevorzugt ist das Wellenstück 75 aus Sintermetall gefertigt, während die Welle 34 als Spritzgußteil aus technischen Kunststoffen hergestellt ist. Der Boden der topfförmigen Aufnahme 50 weist eine zentrisch angeordnete, kegel stumpfartige Erhebung 63 mit einer zentrisch angeordneten Sacklochbohrung 57 auf, welche zur klemmenden Aufnahme einer Achse 56 dient, welche bevorzugt aus einem abriebfesten Material, wie zum Beispiel Stahl, gefertigt ist. Die Achse 56 schließt mit der Welle 34 einen rechten Winkel ein und dient zur Lagerung des drehbaren Borstenträgers 38. Der Borstenträger 38 ist im Ausführungsbeispiel zweistückig aufgebaut, nämlich aus einem Zapfen 59 mit einer angeformten Ringschulter 61 und einem den Zapfen 59 übergreifenden Hülsenabschnitt 58 mit einer einstückig angeformten Trägerplatte 44, die sich oberhalb der topfförmigen Aufnahme 50 abdeckend über diese erstreckt. Im Übergangsbereich zwischen der Ringschulter 61 und dem Zapfen 59 ist eine Kegelradverzahnung 46 vorgesehen, welche mit dem Kegelradsegment 48 kämmt. Die Kegelradverzahnung 46 ist im Bereich des Fußpunkts 53 der Achse 56 angeordnet. Bevorzugt liegt die genaue axiale Positionierung der Kegelradverzahnung 46 in einem solchen Bereich, daß die Drehmomentübertragung auf die Kegelradverzahnung 46 etwas oberhalb des Fußpunktes 53 erfolgt. Der Zapfen 59 weist auf der Unterseite einen zentrischen, kegelstumpfförmigen Rücksprung auf, so daß ein Teil der Erhebung 63 in diesen Rücksprung eingreifen kann, wobei ein geringer Spalt zwischen der Erhebung 63 und dem Zapfen 59 erhalten bleibt. Der Zapfen 59, die Ringschulter 61 und die Kegelradverzahnung 46 bestehen bevorzugt aus einem einstückigen Sintermetallteil, während der Hülsenabschnitt 58 und die Trägerplatte 44 aus technischen Kunststoffen als ein Spritzgußteil gefertigt sind.

Zur Übertragung der erforderlichen Drehmomente zwischen dem Zapfen 59 und dem Hülsenabschnitt 58 weisen diese eine Kerbverzahnung 81 auf, wie sie in Fig. 3 dargestellt ist. Deutlich erkennbar ist die Kegelradverzahnung 46 und die Kerbverzahnung 81, die als einseitiger, exzentrisch angebrachter Schwalbenschwanz am zentrischen Teil des Zapfens 59 angeordnet ist. Die den Zapfen übergreifende Hülse 58 weist eine entsprechende einseitige, exzentrische, schwalbenschwanzartige Ausbildung auf, so daß eine ausreichende Fläche zur Übertragung der Drehmomente auf die Trägerplatte 44 gewährleistet ist. Eine axiale Sicherung der Trägerplatte 44 bzw. des Hülsenabschnitts 58 an dem Zapfen 59 wird durch Hinterspritzen, Kleben oder Ultraschallschweißen bewerkstelligt. Der Zapfen 59 ist im Zentrum von einer Sacklochbohrung 55 durchsetzt, die zur Aufnahme des freien Endes der Achse 56 dient. In der Trägerplatte 44 sind Bohrungen zur Aufnahme von einzelnen Borsten 45 oder Borstenbüscheln vorgesehen.

Im außermittigen Bodenbereich der topfförmigen Aufnahme 50 sind Durchbrechungen 64, 65 des Gehäuses vorgesehen. Ebensolche Durchbrechungen befinden sich im Gehäusewandbereich des Trägerrohrs 36. Im Bereich der Welle 34 sind die Durchbrechungen mit den Bezugsziffern 66 und 67 bezeichnet. Weitere in der Zeichnung nicht sichtbare Durchbrechungen des Gehäuses des Trägerrohrs 36 befinden sich im Gehäuseteil 68, und zwar in dem oberhalb des Wellenstücks 75 liegenden, oberen Seitenwandbereich.

Der Bürstenteil 24 wird wie im folgenden beschrieben zusammengebaut. Der Borstenträger 38 wird von oben in die topfförmige Aufnahme 50 des Trägerrohrs 36 auf das freie Ende der Achse 56 aufgeschoben. Die schwalbenschwanzartige, exzentrisch angeordnete Kerbverzahnung ist in Richtung des stirnseitigen Endes des Bürstenteils 24, benachbart der Seitenwand 47, ausgerichtet. Durch die griffseitige Öffnung des Trägerrohrs 36 wird das Wellenstück 75 mittels eines Hilfswerkzeuges in das Trägerrohr 36 eingebracht, so daß das Wellenstück 75 an der Anlagefläche im Übergangsbereich 51 zur Anlage kommt. Aufgrund der Tatsache, daß das Wellenstück 75 nur mit einem Kegelradsegment 48, nicht aber mit einer Verzahnung über den vollen Umfang versehen ist, ist das Kegelradsegment 48 in einer vorbestimmten Winkellage bezüglich der Längsmittelachse 52 auszurichten. Anschließend wird das Wellenstück 75 mittels des Ringes 60 und des Sicherungsringes 62, zum Beispiel einem Zackenring, axial gesichert. Durch das Übergreifen des Kegelradsegments 48 über die Kegelradverzahnung 46 des Borstenträgers ist damit auch der Borstenträger 38 gegen axiale Verschiebungen auf der Achse 56 gesichert. Schließlich wird die Welle 34 in die Aufnahme im Bereich der Nabe 49 des Wellenstücks 75 eingebracht. Eine Drehmomentübertragung von der Welle 34 auf das Wellenstück 75 ist durch die Kerbverzahnung 80 im Bereich des Eingriffs der Welle 34 in das Wellenstück 75 gewährleistet. Durch in der Zeichnung nicht näher dargestellte Mittel wird auch die Welle 34 gegen eine axiale Verschiebung in Bezug auf die Längsmittelachse 52 gesichert. Die Welle 34 ist mit einer Antriebswelle des Griffteils 22 und das Trägerrohr 36 mit dem Gehäuse des Griffteils kuppelbar.

Durch die vorteilhafte Anordnung der Welle 34 bzw. des Wellenstücks 75 in Bezug auf die Kegelradverzahnung 46 des Borstenträgers 38 erfüllt die Welle 34 bzw. das Wellenstück 75 nicht nur die Funktion einer axialen Sicherung für den Borstenträger, sondern es treten noch weitere Vorteile gemäß der folgenden Beschreibung auf. Wie den allgemeinen Fachbüchern zur Getriebelehre bzw. Kegelradkonstruktionen ohne weiteres zu entnehmen ist, kann die auf ein angetriebenes Zahnrad wirkende Kraft, die im wesentlichen senkrecht zu den Zahnflächen der Verzahnung wirkt, in ihre Komponenten Umfangskraft, Axialkraft und Radialkraft zerlegt werden. Die Umfangskraft ist gerade die Kraftkomponente, durch die das aufgenommene Drehmoment des angetriebenen Zahnrades bestimmt wird. Die Axialkraft und die Radialkraft sind Verlustkräfte, die nichts zur Größe des übertragenen Drehmoments beitragen, aber insbesondere auch die Lager des angetriebenen Zahnrades beanspruchen. Im vorliegenden Ausführungsbeispiel wirkt die Axialkraft entlang der Drehachse 54 des Borstenträgers in Richtung des Bodenteils der topfförmigen Aufnahme 50. Diese Axialkraft wird vom Widerlager zwischen dem Kopfende der Achse 56 und dem Kopfbereich der Sacklochbohrung 55 aufgenommen. In diesem Bereich treten auch kaum sichtbare Verschleißerscheinungen des Lagers auf, da Zahnputzmittel in diesen Bereich aufgrund der exakten Passung zwischen Achse 56 und Sacklochbohrung 55 kaum eindringen kann. Dagegen üben die Radialkräfte ein Biegemoment auf die Achse 56 aus, welches naturgemäß mit dem Abstand zwischen dem Punkt der Kraftausübung auf die Achse und dem Befestigungspunkt der Achse zunimmt. Es ist somit vorteilhaft, die Kraft- bzw. Drehmomenteinleitung in den Borstenträger 38 in einem solchen axialen Bereich vorzunehmen, der möglichst nahe am Befestigungspunkt der Achse 56 liegt. Die auf die Achse 56 einwirkenden Biegemomente aufgrund der bei der Drehmomentübertragung entstehenden radialen Kraftkomponenten werden durch diese Maßnahme minimiert. Ganz beson- ders vorteilhaft erweist sich die Maßnahme, die Kraft in die Kegelradverzahnung 46 in einen solchen axialen Bereich der Dreh- achse 56 einzuleiten, der etwas oberhalb des Befestigungspunktes der Achse 56 liegt. Das aus den radialen Kraftanteilen resultie- rende Kippmoment auf die Achse 56 bewirkt ein Kippen der Achse 56 in Richtung der Seitenwand 47 der topfförmigen Aufnahme 50. Folg- lich kippt auch die Ringschulter 61 mit der darüberliegenden Kegelradverzahnung 46 um diesen Winkel aus der Ideallage. Hier- durch greifen die Zähne des Kegelradsegments 48 und die Zähne der Kegelradverzahnung 46 jedoch enger ineinander. Geht man davon aus, daß die Zähne des Kegelradgetriebes 42 mit der Zeit aufgrund der Einwirkung von Zahnputzmitteln abgeschliffen bzw. abgenutzt werden und auch das Spiel zwischen der Achse 56 und der Sacklochbohrung 55 größer wird, eine Drehmomentübertragung über längere Zeit möglich, da die auf die Achse 56 einwirkenden Kippmomente aufgrund der Radialkräfte in Richtung eines tieferen Eingriffs der Zahnräder des Getriebes 42 wirken. Durch diese vorteilhafte Anordnung der Zahnräder des Getriebes 42 zueinander und bezüglich des Befestigungspunktes der Achse 56 ist eine Erhöhung der Lebensdauer des Bürstenteils 24 auch unter Inkaufnahme eines bestimmten Verschleißgrades erreichbar.

Die Durchbrechungen 66 und 67 im Trägerrohr 36 und die Durchbrechungen 64 und 65 im Boden der topfförmigen Aufnahme 50 dienen einer leichteren Reinigung des Bürstenteils zur Entfernung von Zahnreinigungsmitteln und anderen Fremdkörpern. Die Durchbrechungen 68 oberhalb des Wellenstücks 75 im oberen Seitenwandbereich des Trägerrohrs 36 unterhalb der Trägerplatte 44 dienen nur untergeordnet einer Reinigung des Bürstenteils 24. Aufgrund der Formgebung des Wellenstücks 75, wie sie durch den Querschnitt 74 angedeutet ist, wirkt das Wellenstück 75 im oszillierenden Betrieb wie eine Pumpe und preßt die in diesem Bereich befindliche Flüssigkeit einerseits in die topfförmige Aufnahme 50, andererseits aber auch in Richtung der Welle 34 durch die zwischen dem Wellenstück 75 und der Innenwand des Trägerrohrs 36 befindlichen Spalte. Um diesen Druck abzubauen, sind oberhalb des Wellenstücks 75 Durchbrechungen 68 im Gehäuse des Trägerrohrs 36 vorgesehen. Da trotz dieser Maßnahmen nicht ganz auszuschließen ist, daß Flüssigkeit mit Fremdkörpern am Wellenstück 75 vorbei in das Innere des Trägerrohrs 36 gelangt und entlang der Welle 34 in den Kupplungsbereich 40 zwischen das Griffteil 22 und Bürstenteil 24 eindringt, sind an der Welle 34 im Bereich der Durchbrechungen 66 und 67 des Trägerrohrs 36 keilförmige Verdickungen 70, 71, 72 angebracht. Läuft mit Fremdkörpern vermischte Flüssigkeit über diese Verdickungen 70, 71, 72, so werden die Flüssigkeit und die Fremdkörper aufgrund der an diesen Verdickungen wirkenden erhöhten Zentrifugalkraft zum größten Teil von der Welle 34 weg und durch die Durchbrechungen 66, 67 aus dem Trägerrohr 36 hinausgeschleudert. Die Verdickungen 70, 71, 72 haben somit die Wirkung von Schleuderringen zur Entfernung von Fremdpartikeln und Flüssigkeit aus dem Inneren des Trägerrohrs 36. Auch durch diese Maßnahme wird eine erhöhte Funktionssicherheit und Verschleißfreiheit des Bürstenteils 24 gewährleistet.

Das Ausführungsbeispiel der Erfindung wurde anhand einer Zahnbürste beschrieben, deren Borstenträger 38 senkrecht zur Längsmittelachse 52 des Bürstenteils 24 alternierend in einem Winkel von ca. +/- 35° rotiert. Die Erfindung ist jedoch nicht auf diese Ausführungsform beschränkt und läßt sich ebenso vorteilhaft für kontinuierlich rotierende Zahnbürsten, die durchaus in anderen Winkeln als in einem rechten Winkel bezüglich der Längsmittelachse des Bürstenteils angeordnet sind, einsetzen.

## Patentansprüche

1. Elektrische Zahnbürste (20) mit den Merkmalen
a) ein Griffteil(22) umfaßt einen elektromotorischen Antrieb (28),
b) ein Bürstenteil (24) ist mit dem Griffteil (22) verbindbar,
c) der Bürstenteil (24) umfaßt eine Welle (34) und Mittel (75) zur Drehmomentabgabe an einen Borstenträger (38) und einen am dem Griffteil (22) abgewandten Ende drehbar gelagerten Borstenträger (38),
d) der Borstenträger (38) umfaßt Mittel (59, 61) zur Drehmomentaufnahme und Mittel (44) zur Halterung von Borsten (45),
e) eine Drehachse (54) des Borstenträgers (38) ist winklig, insbesondere in etwa rechtwinklig zu einer Längsmittelachse (52) des Bürstenteils (24) ausgerichtet,
dadurch gekennzeichnet, daß alle Mittel (59, 61, 75) zur Drehmomentübertragung als separate Teile ausgebildet sind, aus Sintermetall bestehen und über Kerbverzahnungen (90, 81), insbesondere Schwalbenschwanzverzahnungen, jeweils mit der Welle (34) bzw. den Mitteln (44) zur Halterung der Borsten (45) verbunden sind.

2. Elektrische Zahnbürste nach Anspruch 1, dadurch gekennzeichnet, daß die Mittel zur Drehmomentaufnahme und die Mittel zur Halterung der Borsten (45) einander gegenüberliegend, insbesondere jeweils unterhalb bzw. oberhalb der Längsmittelachse (52) des Bürstenteils (24) am Borstenträger (38) angeordnet sind und die Mittel zur Drehmomentabgabe der Welle (34) im Bereich zwischen den Mitteln zur Drehmomentaufnahme und den Mitteln zur Halterung der Borsten überlappend in den Borstenträger(38) eingreifen.

3. Elektrische Zahnbürste nach Anspruch 1 oder 2, dadurch gekennzeichnet, daß der Borstenträger (38) auf einer Achse (56) des Bürstenteils (24) gelagert ist und die Mittel zur Drehmomentaufnahme im Bereich eines Fußpunktes (53) der Achse (56) am Borstenträger (38) angeordnet sind.

4. Elektrische Zahnbürste nach einem der Ansprüche 1 bis 3, gekennzeichet durch eine Anordnung der Drehmomentübertragungsmittel in der Weise, daß die Drehmomentübertragung auf den Borstenträger (38) oberhalb eines Fußpunktes (53) einer Achse (56) zur Lagerung des Borstenträgers (38) und unterhalb der Längsmittelachse (52) des Bürstenteils (24) erfolgt.

5. Elektrische Zahnbürste nach einem der Ansprüche 1 - 4, dadurch gekennzeichnet, daß die Welle (34) an dem dem Borstenträger (38) zugewandten Ende eine Kegelradverzahnung aufweist, die in eine Kegelradverzahnung (46) im Bodenbereich des Borstenträgers (38) eingreift.

6. Elektrische Zahnbürste nach Anspruch 5, dadurch gekennzeichnet, daß der Borstenträger (38) eine der Kegelradverzahnung (46) gegenüberliegende Trägerplatte (44) zur Aufnahme von Borsten (45) bzw. Borstenbüscheln (45) aufweist.

7. Elektrische Zahnbürste nach Anspruch 5 oder 6, dadurch gekennzeichnet, daß die Kegelradverzahnung der Welle (34) als Kegelradsegment (48) ausgebildet und der Borstenträger (38) in einem Winkelbereich von etwa plus/minus 35° alternierend drehbar angetrieben ist.

8. Elektrische Zahnbürste nach einem der Ansprüche 1 bis 7, dadurch gekennzeichnet, daß das Bürstenteil (24) ein Trägerrohr (36) zur Aufnahme der Welle (34) umfaßt, wobei das Trägerrohr (36) in eine topfförmige Aufnahme (50) für den Borstenträger (38) mündet.

9. Elektrische Zahnbürste nach Anspruch 8, dadurch gekennzeichnet, daß am Boden der topfförmigen Aufnahme (50) eine Achse (56) einseitig befestigt ist, die von einer Sacklochbohrung (55) im Borstenträger (38) aufnehmbar ist.

10. Elektrische Zahnbürste nach Anspruch 8 oder 9, dadurch gekennzeichnet, daß das Trägerrohr (36) und die topfförmige Aufnahme (50) Durchbrechungen (64-68) aufweist.

11. Elektrische Zahnbürste nach Anspruch 10, dadurch gekennzeichnet, daß die Welle (34) im Bereich der Durchbrechungen (66, 67) im Trägerrohr (36) über den Umfang eine keilförmige Verdickung (70, 71, 72) aufweist.

## Claims

1. An electric toothbrush (20) incorporating the following features:
(a) a handle section (22) comprising an electric motor drive (28);
(b) a brush section (24) adapted to be connected to the handle section (22);
(c) the brush section (24) comprising a shaft (34) and means (75) for delivering a torque to a bristle carrier (38), and a bristle carrier (38) rotatably carried at the end remote from the handle section (22);
(d) the bristle carrier (38) comprising means (59, 61) for receiving the torque and means (44) for mounting bristles (45);
(e) an axis of rotation (54) of the bristle carrier (38) being arranged at an angle, particularly at approximately right angles, to a longitudinal center line (52) of the brush section (24);
characterized in that all the means (59, 61, 75) for transmitting a torque are configured as separate parts, are made of sintered metal and are connected to the shaft (34) and, respectively, to the means (44) for mounting the bristles (45) by means of interengaging splines (80, 81), in particular dovetails.

2. The electric toothbrush as claimed in claim 1, characterized in that the means for receiving the torque and the means for mounting the bristles (45) are in relative opposite arrangement on the bristle carrier (38), in particular below and, respectively, above the longitudinal center line (52) of the brush section (24), and the means for delivering the torque of the shaft (34) engage in an overlapping fashion in the bristle carrier (38) in the area intermediate the torque-receiving means and the means for mounting the bristles.

3. The electric toothbrush as claimed in claim 1 or claim 2, characterized in that the bristle carrier (38) is mounted on a shaft (56) of the brush section (24), and the torque-receiving means are arranged on the bristle carrier (38) in the area of a low end (53) of the shaft (56).

4. The electric toothbrush as claimed in any one of the claims 1 to 3, characterized in that the torque-transmitting means are arranged in such a manner that the transmission of torques to the bristle carrier (38) occurs above a low end (53) of a shaft (56) for mounting the bristle carrier (38) and below the longitudinal center line (52) of the brush section (24).

5. The electric toothbrush as claimed in any one of the claims 1 to 4, characterized in that the shaft (34) includes bevel gear teeth at its end close to the bristle carrier (38), which teeth are in engagement with bevel gear teeth (46) provided in the bottom area of the bristle carrier (38).

6. The electric toothbrush as claimed in claim 5, characterized in that the bristle carrier (38) includes a mounting plate (44) opposite the bevel gear teeth (46) for the mounting of bristles (45) or tufts (45) of bristles.

7. The electric toothbrush as claimed in claim 5 or claim 6, characterized in that the bevel gear teeth of the shaft (34) are configured as a bevel gear segment (48), and that the bristle carrier (38) is driven to rotate in an angular range of about plus/minus 35°, reversing direction in alternating sequence.

8. The electric toothbrush as claimed in any one of the claims 1 to 7, characterized in that the brush section (24) includes a mounting tube (36) for receiving the shaft (34), with the mounting tube (36) terminating in a cup-shaped socket (50) for receiving the bristle carrier (38).

9. The electric toothbrush as claimed in claim 8, characterized in that a shaft (56) has one end fastened to the bottom of the cup-shaped socket (50), its other end being adapted to be received in a blind-end bore (55) in the bristle carrier (38).

10. The electric toothbrush as claimed in claim 8 or claim 9, characterized in that the mounting tube (36) and the cup-shaped socket (50) are provided with apertures (64-68).

11. The electric toothbrush as claimed in claim 10, characterized in that the shaft (34) includes wedge-shaped beadings (70, 71,72) extending over the shaft circumference in the area of the apertures (66, 67).

## Revendications

1. Brosse à dents électrique (20) ayant les particularités suivantes
a) elle comporte une partie manche (22) contenant un système d'entraînement à moteur électrique (28),
b) elle comporte une partie brosse (24) qui peut être reliée à la partie manche (22),
c) la partie brosse (24) contient un arbre (34), des moyens (75) pour délivrer le couple à un porte-soies (38) et ce porte-soies (38), lequel est monté rotatif à une extrémité éloignée de la partie manche (22),
d) le porte-soies (38) comprend des moyens (59, 61) pour recevoir le couple et des moyens (44) pour maintenir des soies (45),
e) l'axe de rotation (54) du porte-soies (38) étant orienté sous un angle, en particulier sous un angle à peu près droit par rapport à l'axe longitudinal (52) de la partie brosse (24),
caractérisée en ce que tous les moyens (59, 61, 75) pour la transmission du couple sont réalisés comme des pièces séparées en métal fritté et sont reliés par des dentures ou assemblages à cannelures ou analogues (90, 91), en particulier des assemblages en queue d'aronde, respectivement à l'arbre (34) et aux moyens (44) pour maintenir les soies (45).

2. Brosse à dents électrique selon la revendication 1, caractérisée en ce que les moyens pour recevoir le couple et les moyens pour maintenir les soies (45) sont agencés les uns à l'opposé des autres et sont disposés en particulier au-dessous et au-dessus respectivement de l'axe longitudinal (52) de la partie brosse (24) sur le porte-soies (38), et les moyens pour délivrer le couple, moyens qui sont prévus sur l'arbre (34), pénètrent à chevauchement dans le porte-soies (38) dans la zone entre les moyens pour recevoir le couple et les moyens pour maintenir les soies.

3. Brosse à dents électrique selon la revendication 1 ou 2, caractérisée en ce que le porte-soies (38) est monté sur un axe (56) de la partie brosse (24) et les moyens pour recevoir le couple sont disposés dans la zone de la base (53) de l'axe (56) sur le porte-soies (38).

4. Brosse à dents électrique selon une des revendications 1 à 3, caractérisée en ce que les moyens de transmission du couple sont agencés de manière que la transmission du couple au porte-soies s'effectue au-dessus de la base (53) d'un axe (56) pour le montage du porte-soies (38) et au-dessous de l'axe longitudinal (52) de la partie brosse (24).

5. Brosse à dents électrique selon une des revendications 1 - 4, caractérisée en ce que l'arbre (34) présente, à l'extrémité dirigée vers le porte-soies (38), une denture de roue conique qui est en prise avec une denture de roue conique (46) située dans la zone du fond du porte-soies (38).

6. Brosse à dents électrique selon la revendication 5, caractérisée en ce que le porte-soies (38) comporte une plaque support (44), située à l'opposé de la denture de roue conique (46), pour la réception de soies (45) ou de touffes de soies (45).

7. Brosse à dents électrique selon la revendication 5 ou 6, caractérisée en ce que la denture de roue conique de l'arbre (34) est réalisée sous la forme d'un segment de roue conique (48) et le porte-soies (38) est entraîné en rotation, en va-et-vient, dans une plage angulaire d'environ plus/moins 35°.

8. Brosse à dents électrique selon une des revendications 1 à 7, caractérisée en ce que la partie brosse (24) comprend un tube porteur (36) pour la réception de l'arbre (34), tube (36) qui débouche dans un logement (50) en forme de coupelle pour le porte-soies (38).

9. Brosse à dents électrique selon la revendication 8, caractérisée en ce qu'un axe (56) est fixé par un côté au fond du logement (50) en forme de coupelle et engagé par sa partie libre dans un trou borgne (55) du porte-soies (38).

10. Brosse à dents électrique selon la revendication 8 ou 9, caractérisée en ce que le tube porteur (36) et le logement (50) en forme de coupelle présentent des ajours (64-68).

11. Brosse à dents électrique selon la revendication 10, caractérisée en ce que l'arbre (34) est entouré d'un épaississement en forme de coin (70, 71, 72) dans la zone des ajours (66, 67) du tube porteur (36).
